# EUROPEAN PATENT SPECIFICATION

(11) **EP 3 188 878 B1**
(45) Date of publication and mention of the grant of the patent: **20.11.2019**
(21) Application number: 15763375.1
(22) Date of filing: 26.08.2015
(51) Int. Cl.: B26B 13/28

(54) **CUTTING TOOL AND MANUFACTURING METHOD**
SCHNEIDEWRKZEUG UND HERSTELLUNGSVERFAHREN
OUTIL DE COUPE ET PROCÉDÉ DE FABRICATION

(30) Priority: 01.09.2014 FI 20145757
(43) Date of publication of application: 12.07.2017
(73) Proprietor: Fiskars Finland Oy Ab, 00560 Helsinki (FI)
(72) Inventor: SAVOLAINEN, Heikki, 00560 Helsinki (FI)
(74) Representative: Kolster Oy Ab
(86) International application number: PCT/FI2015/050547
(87) International publication number: WO 2016/034764

(56) References cited:
- WO-A1-03/094756
- US-A1- 2006 010 692
- US-A1- 2007 101 582
- US-A1- 2007 169 356
- US-A1- 2012 047 751

## Description

### BACKGROUND OF THE INVENTION

### FIELD OF THE INVENTION

This invention relates to a cutting tool and more particularly to a joint for a cutting tool. In the following the invention will be explained by way of example by referring to a pair of scissors. It should, however, be observed that the invention may be implemented also in connection with other cutting tools.

### DESCRIPTION OF PRIOR ART

Previously there is known a pair of scissors with a joint where the first blade is provided with a T shaped shaft protruding from the first blade and where the second blade is provided with a hole having a shape allowing the T shaped shaft to be threaded through the hole while the first and second blade are rotated to a predetermined mutual position. Once the T shaped shaft is threaded through the hole, the first and second blade are rotated out of the predetermined mutual position, such that the transverse part of the T shaped shaft comes into contact with the outer surface of the second blade and thereby locks the blades to each other.

A problem with the previously known solution is that it is difficult and expensive to provide the shaft made of metal and the hole with optimal shapes. Instead the shaft and hole is provided with sharp corners which makes it relatively difficult the thread the T shaped shaft through the hole. Additionally, during use of the scissors the sharp edges of the shaft and hole cause scratches to appear in the vicinity of the joint, which eventually wears out the material such that the joint may not remain sufficiently tight for the entire lifetime of the pair of scissors. This may lower the performance of the pair of scissors, as a loose joint allows a gap to occur between the blades while cutting.

Previously there is also known from US - A - 2007/0169356 a solution where a first and second lever are attached to each other by utilizing a rivet protruding through a hole in the first and second lever and which is expanded outwards in order to attach the parts to each other. A drawback with such a solution is that due to wear the tension of the joint may change and that in such a situation it is difficult to detach the parts from each other, as they are permanently attached to each other by a rivet.

### SUMMARY OF THE INVENTION

An object of the present invention is to solve the above mentioned drawback with a novel cutting tool and manufacturing method as defined in independent claims 1 and 8.

The use of a first and second inlay arranged in holes provided in the first and second blade of the cutting tool makes it easier to shape the surfaces of the joint in an optimal way to facilitate easy assembly and disassembly of the cutting tool. Additionally, the inlays and the shaft may easily be manufactured of a material other than the blades if it is determined that the material of the blades is not optimal for these parts.

Preferred embodiments of the invention are disclosed in the dependent claims.

### BRIEF DESCRIPTION OF DRAWINGS

In the following the present invention will be described in closer detail by way of example and with reference to the attached drawings, in which
Figures 1 and 2 illustrate a first embodiment of a cutting tool,
Figure 3 is an enlargement of the joint in the cutting tool of Figures 1 and 2, and
Figures 4 and 5 illustrate details of the joint of Figure 3.

### DESCRIPTION OF AT LEAST ONE EMBODIMENT

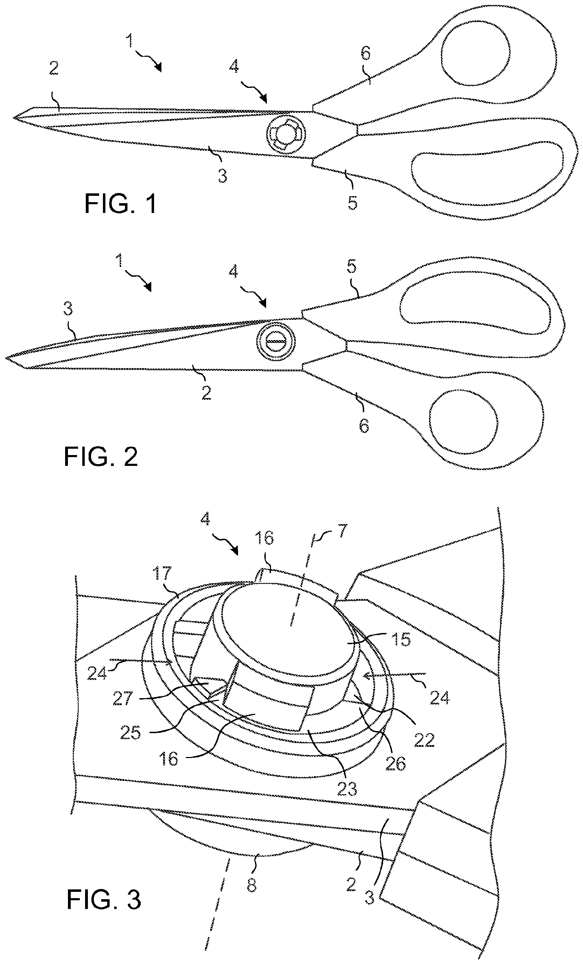

Figures 1 and 2 illustrate a first embodiment of a cutting tool 1. In the illustrated example the cutting tool 1 consists of a pair of scissors, with a first blade 2 and a second blade 3 attached to each other by a joint 4. A first handle 5 and a second handle 6 are operatively connected to the first 2 and second 3 blade for moving the first 2 and second 3 blade in relation to each other around a rotation axis 7 of the joint 4.

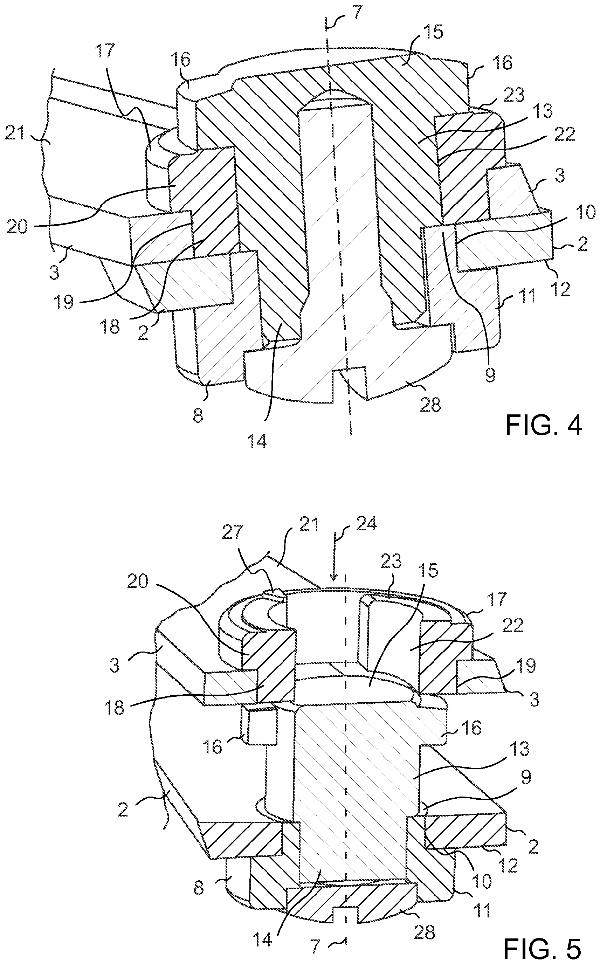

Figures 4 and 5 illustrate details of the joint 4 of Figure 3. The joint 4 comprises a first inlay 8 with a protruding end 9 protruding into a hole 10 in the first blade 2. Additionally, the first inlay comprises a flange 11 contacting an outer surface 12 of the first blade 2.

A shaft 13 has a first end 14 joined to the protruding end 9 of the first inlay 8 and a second end 15 protruding from the protruding end 9 of the first inlay 8. Thus the shaft 13 is arranged as an extension of the protruding end 9 of the first inlay 8. The shaft 13 is provided with at least one transverse shoulder 16 in the second end 15. In the drawings it is, however, by way of example assumed that the second end of the shaft 13 is provided with two transverse shoulders 16, such that the second end 15 of the shaft 13 is generally T shaped.

A second inlay 17 has a protruding end 18 protruding into a hole 19 in the second blade 3. A flange 20 of the second inlay 17 contacts an outer surface 21 of the second blade 3. The second inlay 17 has a hole 22 receiving the second end 15 of the shaft 13. The second inlay 17 is provided with an engagement surface 23 for engaging with the shoulders 16 of the shaft 13 for attaching the second end 15 of the shaft 13 to the second inlay 17. In the example of Figures 3 to 5, the engagement surface 23 is the outer surface of the second inlay 17 which faces away from the first blade 2. In the illustrated example, the hole 22 extends through the entire second inlay 17, such that the second end 15 of the shaft protrudes through the entire second inlay 17. This is however, not necessary in all embodiments, as in some embodiments the hole of the second inlay need not protrude entirely through the second inlay, but instead the hole may be implemented as a cavity receiving the second end of the shaft.

As best seen in Figures 3 and 5, the hole 22 of the second inlay 17 has a shape and width allowing the second end 15 of the shaft 13 with the shoulders 16 to pass into the hole 22 while the shaft and second inlay are rotated into a mutual predetermined release position. In praxis the illustrated shoulders 16 are at that stage rotated into a position illustrated by arrows 24, where the diameter of the hole 22 is large enough to allow the shoulders 16 to pass through the hole 22. However, the shape and width of the hole 22 prevents the shaft 13 and shoulders 16 from passing through the hole 22 when the shaft 13 and second inlay 17 are not rotated into the mutual predetermined release position. For practical reasons the release position is set in such a way that when the shaft 13 and second inlay 17 reach the release position, the blades are in an open position, in other words the first 2 and second 3 blades have been mutually rotated around the rotation axis 7 as much away from each other as possible.

The shaft 13 is attached to the first blade 2 via the first inlay 8 to rotate together with the first blade 2 around the rotation axis 7. To facilitate this the first inlay 8 needs to be fixed to the first blade 2 such that it always rotates with the first blade 2. One alternative to accomplish this is that the hole 10 in the first blade 2 is not round, but oval or has a corner, for instance, while the first inlay 8 has a matching shape locking it into the hole 10. Similarly the second inlay 17 is attached to the second blade 3 to rotate with the second blade 3 around the rotation axis 7. Also this may be accomplished by selecting a suitable shape for the hole 19 in the second blade 3 and a matching shape for the second inlay 17. Alternatively, it is possible that the holes 10 and 19 are circular, in which case the inlays may be non-rotatably attached to the first and second blade in some other way, such as by use of an adhesive, for instance.

In the illustrated example the engagement surface 23 is inclined in relation to the first inlay 8 such that the shoulders 16 contact parts 25 of the engagement surface 23 which is are located further away from the first inlay 8, when the first 2 and second 3 blades are close to teach other (the position illustrated in Figures 1 to 3), than parts 26 of the engagement surface 23 which the shoulders 16 contact when the first 2 and second blade 3 are located at a distance from each other (not illustrated in the Figures). An advantage obtained with such an inclined engagement surface 23 is that the joint is relatively loose in the beginning of a cutting action (when the blades are mutually rotated away from each other). However, as the blades move closer to each other, the shoulders 16 move closer to the parts 25 of the engagement surface which is located furthest away from the first inlay 8. Due to this the tension in the joint becomes higher at the end of the cutting action, such that the blades 2 and 3 are pressed with a maximum force towards each other at the end of the cutting movement. This prevents the occurrence of a gap between the blades 2 and 3 at the end of the cutting movement, which is important for the cutting tool 1, such as a pair of scissors, in order for the cutting tool to work as efficiently as possible.

From Figure 3 it can be seen that the engagement surface 23 is provided with a preventer 27 in the form of a protrusion protruding outwards from the engagement surface 23. This preventer comes into contact with one of the shoulders 16 once the shaft is rotated counterclockwise in Figure 3 into the release position. This improves the user friendliness, as it is very easy for the user to know when the release position has been reached, as further mutual rotation is not possible due to the preventer.

In the illustrated example it is by way of example assumed that the shaft 13 is joined to the first inlay 8 with a screw 28, such as a steel screw, extending through the first inlay 8. Such a screw makes it possible for the user to adjust the tension of the joint 4. Additionally, the screw 28 may extend substantially through the entire shaft 13 in which case the screw 28 strengthens the shaft 13. In praxis the upper end of the screw 28 in Figure 4 may be visible through the upper surface of the shaft 13, or alternatively not visible as in Figure 4, but with the end of the screw in close vicinity to the upper surface of the shaft. In both cases the screw 28 extends substantially through the entire shaft 13.

It should, however, be observed that the use of a screw is not necessary in all embodiments. One possible alternative is to manufacture the shaft 13 and first inlay 8 to consist of one single part only. In that case the material of the combined shaft and first inlay joins the first end 14 of the shaft to the protruding end 9 of the first inlay 8.

One or more of the first inlay 8, the second inlay 17 and the shaft 13 may be manufactured of plastic. One alternative is to utilize glass fiber reinforced polyamide. In that case the joint 4 for the cutting tool may be manufactured as follows:

The first blade 2 of steel, for instance, is provided with a hole at the location of the pivot 4, and arranged in a mould. The first inlay 8 is casted in the mould with an injection-molding process, for instance. The second blade 3, of steel, for instance, is provided with a hole at the location of the pivot 4, and arranged in a mould. The second inlay 17 is casted in the mould with an injection-molding process for instance.

The shaft 13 may also be cast with an injection-molding process, after which the first end 14 of the shaft 13 may be attached to the first inlay 8 with a screw 28.

The shaft 13 and the second inlay 17 are rotated into a mutual predetermined release position, where the shaft with the shoulder 16 is threaded through the hole 22 in the second inlay 17. Finally, the shaft 13 and the second inlay 17 are rotated away from the mutual predetermined release position such that the shoulder 16 engages with the engagement surface 23 of the second inlay 17 and locks the first 2 and second 3 blade to each other via the shoulder 16 and the engagement surface 23.

An advantage obtained by manufacturing the parts of the joint in a mould by injection-molding, for instance, is that it is easier to manufacture the parts exactly according to desired tolerances, and the edges of the parts may easily and without additional work phases or costs be rounded which makes it easier to assemble joint. The parts may thereby be manufactured in such shapes and dimensions and of such materials that the material wear during use of the cutting tool may be minimized.

It is to be understood that the above description and the accompanying figures are only intended to illustrate the present invention. It will be obvious to a person skilled in the art that the invention can be varied and modified without departing from the scope of the invention as defined in the appended claims.

## Claims

1. A cutting tool (1) comprising:
a first (2) and second (3) blade which are pivotably attached to each other by a joint (4), and
a first (5) and second (6) handle which are operatively connected to the first (2) and second (3) blade for moving the first and second blade in relation to each other around a rotation axis (7) of the joint (4), **characterized in that** the joint comprises:
a first inlay (8) having a protruding end (9) protruding into a hole (10) in the first blade (2) and a flange (11) contacting an outer surface (12) of the first blade (2),
a shaft (13) with a first end (14) joined to the protruding end (9) of the first inlay (8) and with a second end (15) protruding from the protruding end (9) of the first inlay (8), the shaft (13) having at least one transverse shoulder (16) in the second end (15), and
a second inlay (17) having a protruding end (18) protruding into a hole (19) in the second blade (3) and a flange (20) contacting an outer surface (21) of the second blade (3), the second inlay (17) having a hole (22) receiving the second end (15) of the shaft (13), and an engaging surface (23) for engaging with the shoulder (16) of the shaft (13) for attaching the second end (15) of the shaft (13) to the second inlay (17), and wherein
the hole (22) of the second inlay (17) has a shape and width allowing the second end (15) of the shaft (13) with the shoulder (16) to pass into the hole (22) while the shaft (13) and second inlay (17) are rotated into a mutual predetermined release position, but which prevents the shaft (13) and shoulder (16) from passing through the hole (22) when the shaft (13) and second inlay (17) are not rotated into the mutual predetermined release position.

2. The cutting tool according to claim 1, wherein
the shaft (13) is attached to the first blade (2) via the first inlay (8) to rotate with the first blade (2) around the rotation axis (7),
the second inlay (17) is attached to the second blade (3) to rotate with the second blade (3) around the rotation axis (7),
the engagement surface (23) of the second inlay (17) is inclined in relation to the first inlay (8) such that the shoulder (16) contacts a part (25) of the engagement surface (23) which is located further away from the first inlay (8) when the first and second blades (2, 3) are close to each other than a part (26) of the engagement surface (23) which the shoulder (22) contacts when the first (2) and second (3) blade are located at a distance from each other.

3. The cutting tool according to claim 1 or 2, wherein the engagement surface (23) is provided with a preventer (27) contacting the shoulder (16) to prevent the blades (2, 3) from being further rotated away from each other around the rotation axis (6) once the shaft (13) and second inlay (17) have reached the mutual predetermined release position.

4. The cutting tool according to one of claims 1 to 3, wherein the first end (14) of the shaft (13) is joined to the protruding end (9) of the first inlay (8) with a screw (28) extending through the first inlay (8).

5. The cutting tool according to claim 4, wherein the screw (28) extends substantially through the entire shaft (13).

6. The cutting tool according to one of claims 1 to 5, wherein one or more of the first inlay (8), second inlay (17) and shaft (13) are made of plastic.

7. The cutting tool according to one of claims 1 to 6, wherein said cutting tool (1) is a pair of scissors.

8. A method for manufacturing a joint (4) for a cutting tool (1), **characterized in that** the method comprises:
arranging a first blade (2) with a hole (10) in a mould,
casting a first inlay (8) to have a protruding end (9) protruding into the hole (10) in the first blade (2) and a flange (11) contacting an outer surface (12) of the first blade (2),
arranging a second blade (3) with a hole (19) in a mould,
casting a second inlay (17) to have a protruding end (18) protruding into the hole (19) in the second blade (3) and a flange (20) contacting an outer surface (21) of the second blade (3),
joining a first end (14) of a shaft (13) having a transverse shoulder (16) in a second end (15) to the protruding end (9) of the first inlay (8) by a screw (28) extending through the first inlay (8),
rotating the shaft (13) and the second inlay (17) into a mutual predetermined release position and threading the shaft (13) with the shoulder (16) into a hole (22) in the second inlay (17), said hole (22) having a shape and width allowing the second end of the shaft (13) with the shoulder (16) to pass there-through, and
rotating the shaft (13) and the second inlay (17) away from the mutual predetermined release position in order to engage the shoulder (16) with an engagement surface (23) of the second inlay (17) and to attach the first (2) and second blade (3) pivotably to each other with the shoulder (16) and the engagement surface (23).

## Patentansprüche

1. Schneidwerkzeug (1), das Folgendes umfasst:
eine erste (2) und eine zweite (3) Klinge, die durch ein Gelenk (4) schwenkbar aneinander befestigt sind, und
einen ersten (5) und einen zweiten (6) Griff, die zum Bewegen der ersten und der zweiten Klinge mit Bezug aufeinander um eine Drehachse (7) des Gelenks (4) mit der ersten (2) und der zweiten (3) Klinge wirkverbunden sind, **dadurch gekennzeichnet, dass** das Gelenk Folgendes umfasst:
eine erste Einlage (8) mit einem vorstehenden Ende (9), das in ein Loch (10) in der ersten Klinge (2) vorsteht, und einem Flansch (11), der eine Außenfläche (12) der ersten Klinge (2) berührt,
eine Welle (13) mit einem ersten Ende (14), das an das vorstehende Ende (9) der ersten Einlage (8) gekoppelt ist, und mit einem zweiten Ende (15), das vom vorstehenden Ende (9) der ersten Einlage (8) vorsteht, wobei die Welle (13) am zweiten Ende (15) mindestens eine Querschulter (16) aufweist, und
eine zweite Einlage (17) mit einem vorstehenden Ende (18), das in ein Loch (19) in der zweiten Klinge (3) vorsteht, und einem Flansch (20), der eine Außenfläche (21) der zweiten Klinge (3) berührt, wobei die zweite Einlage (17) ein Loch (22), das das zweite Ende (15) der Welle (13) aufnimmt, und eine Eingriffsfläche (23) zum Eingreifen in die Schulter (16) der Welle (13) zum Befestigen des zweiten Endes (15) der Welle (13) an der zweiten Einlage (17) aufweist, und wobei
das Loch (22) der zweiten Einlage (17) eine Form und eine Breite aufweist, die es erlauben, dass das zweite Ende (15) der Welle (13) mit der Schulter (16) in das Loch (22) geführt werden, während die Welle (13) und die zweite Einlage (17) in eine vorbestimmte gegenseitige Löseposition gedreht werden, das aber verhindert, dass die Welle (13) und die Schulter (16) durch das Loch (22) geführt werden, wenn die Welle (13) und die zweite Einlage (17) nicht in die vorbestimmte gegenseitige Löseposition gedreht werden.

2. Schneidwerkzeug nach Anspruch 1, wobei
die Welle (13) via die erste Einlage (8) an der ersten Klinge (2) befestigt ist, um mit der ersten Klinge (2) um die Drehachse (7) zu drehen,
die zweite Einlage (17) an der zweiten Klinge (3) befestigt ist, um sich mit der zweiten Klinge (3) um die Drehachse (7) zu drehen,
die Eingriffsfläche (23) der zweiten Einlage (17) mit Bezug auf die erste Einlage (8) derart geneigt ist, dass die Schulter (16) einen Teil (25) der Eingriffsfläche (23) berührt, der von der ersten Einlage (8) weiter entfernt ist, wenn die erste und die zweite Klinge (2, 3) nah beieinander sind, als ein Teil (26) der Eingriffsfläche (23), den die Schulter (22) berührt, wenn die erste (2) und die zweite (3) Klinge sich in einem Abstand voneinander befinden.

3. Schneidwerkzeug nach Anspruch 1 oder 2, wobei die Eingriffsfläche (23) mit einem Verhinderer (27) versehen ist, der die Schulter (16) berührt, um zu verhindern, dass die Klingen (2, 3) weiter voneinander weg um die Drehachse (6) gedreht werden, nachdem die Welle (13) und die zweite Einlage (17) die vorbestimmte gegenseitige Löseposition erreicht haben.

4. Schneidwerkzeug nach einem der Ansprüche 1 bis 3, wobei das erste Ende (14) der Welle (13) mit einer Schraube (28), die sich durch die erste Einlage (8) erstreckt, an das vorstehende Ende (9) der ersten Einlage (8) gekoppelt ist.

5. Schneidwerkzeug nach Anspruch 4, wobei sich die Schraube (28) im Wesentlichen durch die ganze Welle (13) erstreckt.

6. Schneidwerkzeug nach einem der Ansprüche 1 bis 5, wobei eine oder mehrere der ersten Einlage (8), der zweiten Einlage (17) und der Welle (13) aus Kunststoff bestehen.

7. Schneidwerkzeug nach einem der Ansprüche 1 bis 6, wobei das Schneidwerkzeug (1) eine Schere ist.

8. Verfahren zum Herstellen eines Gelenks (4) für ein Schneidwerkzeug (1), **dadurch gekennzeichnet, dass** das Verfahren Folgendes umfasst:
Anordnen einer ersten Klinge (2) mit einem Loch (10) in einer Gießform,
Gießen einer ersten Einlage (8) derart, dass sie ein vorstehendes Ende (9), das in das Loch (10) in der ersten Klinge (2) vorsteht, und einen Flansch (11), der eine Außenfläche (12) der ersten Klinge (2) berührt, aufweist,
Anordnen einer zweiten Klinge (3) mit einem Loch (19) in einer Gießform,
Gießen einer zweiten Einlage (17) derart, dass sie ein vorstehendes Ende (18), das in das Loch (19) in der zweiten Klinge (3) vorsteht, und einen Flansch (20), der eine Außenfläche (21) der zweiten Klinge (3) berührt, aufweist,
Koppeln eines ersten Endes (14) einer Welle (13), die an einem zweiten Ende (15) eine Querschulter (16) aufweist, an das vorstehende Ende (9) der ersten Einlage (8) mit einer Schraube (28), die sich durch die erste Einlage (8) erstreckt,
Drehen der Welle (13) und der zweiten Einlage (17) in eine vorbestimmte gegenseitige Löseposition und Schrauben der Welle (13) mit der Schulter (16) in ein Loch (22) in der zweiten Einlage (17), wobei das Loch (22) eine Form und eine Breite aufweist, die es erlauben, dass das zweite Ende der Welle (13) mit der Schulter (16) dadurch geführt werden, und
Drehen der Welle (13) und der zweiten Einlage (17) weg von der vorbestimmten gegenseitigen Löseposition, damit die Schulter (16) in eine Eingriffsfläche (23) der zweiten Einlage (17) eingreift und um die erste (2) und die zweite Klinge (3) mit der Schulter (16) und der Eingriffsfläche (23) schwenkbar aneinander zu befestigen.

## Revendications

1. Outil de coupe (1) comprenant :
une première (2) et une seconde (3) lame qui sont fixées de manière pivotante entre elles par un joint (4), et
une première (5) et une seconde (6) poignée qui sont raccordées de manière opérationnelle à la première (2) et à la seconde (3) lame pour déplacer les première et seconde lames l'une par rapport à l'autre autour d'un axe de rotation (7) du joint (4), **caractérisé en ce que** le joint comprend :
une première incrustation (8) ayant une extrémité en saillie (9) faisant saillie dans un trou (10) dans la première lame (2) et une bride (11) en contact avec une surface externe (12) de la première lame (2),
un arbre (13) avec une première extrémité (14) assemblée à l'extrémité en saillie (9) de la première incrustation (8) et avec une seconde extrémité (15) faisant saillie de l'extrémité en saillie (9) de la première incrustation (8), l'arbre (13) ayant au moins un épaulement transversal (16) dans la seconde extrémité (15), et
une seconde incrustation (17) ayant une extrémité en saillie (18) faisant saillie dans un trou (19) dans la seconde lame (3) et une bride (20) en contact avec une surface externe (21) de la seconde lame (3), la seconde incrustation (17) ayant un trou (22) recevant la seconde extrémité (15) de l'arbre (13), et une surface de mise en prise (23) pour se mettre en prise avec l'épaulement (16) de l'arbre (13) pour fixer la seconde extrémité (15) de l'arbre (13) à la seconde incrustation (17), et dans lequel :
le trou (22) de la seconde incrustation (17) a une forme et une largeur permettant à la seconde extrémité (15) de l'arbre (13) avec l'épaulement (16) de passer dans le trou (22) alors que l'arbre (13) et la seconde incrustation (17) sont entraînés en rotation dans une position de libération mutuelle prédéterminée, mais qui empêche l'arbre (13) et l'épaulement (16) de passer à travers le trou (22) lorsque l'arbre (13) et la seconde incrustation (17) ne sont pas entraînés en rotation dans la position de libération mutuelle prédéterminée.

2. Outil de coupe selon la revendication 1, dans lequel :
l'arbre (13) est fixé à la première lame (2) via la première incrustation (8) pour tourner avec la première lame (2) autour de l'axe de rotation (7),
la seconde incrustation (17) est fixée à la seconde lame (3) pour tourner avec la seconde lame (3) autour de l'axe de rotation (7),
la surface de mise en prise (23) de la seconde incrustation (17) est inclinée par rapport à la première incrustation (8) de sorte que l'épaulement (16) est en contact avec une partie (25) de la surface de mise en prise (23) qui est positionnée plus à distance de la première incrustation (8) lorsque les première et seconde lames (2, 3) sont proches l'une de l'autre, qu'une partie (26) de la surface de mise en prise (23) avec laquelle l'épaulement (22) est en contact lorsque les première (2) et seconde (3) lames sont positionnées à une certaine distance l'une de l'autre.

3. Outil de coupe selon la revendication 1 ou 2, dans lequel la surface de mise en prise (23) est prévue avec un obturateur (27) en contact avec l'épaulement (16) pour empêcher les lames (2, 3) d'être davantage entraînées en rotation à distance l'une de l'autre autour de l'axe de rotation (6), une fois que l'arbre (13) et la seconde incrustation (17) ont atteint la position de libération mutuelle prédéterminée.

4. Outil de coupe selon l'une des revendications 1 à 3, dans lequel la première extrémité (14) de l'arbre (13) est assemblée à l'extrémité en saillie (9) de la première incrustation (8) avec une vis (28) qui s'étend à travers la première incrustation (8).

5. Outil de coupe selon la revendication 4, dans lequel la vis (28) s'étend sensiblement à travers la totalité de l'arbre (13).

6. Outil de coupe selon l'une des revendications 1 à 5, dans lequel un ou plusieurs parmi la première incrustation (8), la seconde incrustation (17) et l'arbre (13) sont réalisés à partir de plastique.

7. Outil de coupe selon l'une des revendications 1 à 6, dans lequel ledit d'outil de coupe (1) est une paire de ciseaux.

8. Procédé pour fabriquer un joint (4) pour un outil de coupe (1), **caractérisé en ce que** le procédé comprend les étapes suivantes :
agencer une première lame (2) avec un trou (10) dans un moule,
mouler la première incrustation (8) pour avoir une extrémité en saillie (9) faisant saillie dans le trou (10) dans la première lame (2) et une bride (11) en contact avec une surface externe (12) de la première lame (2),
agencer une seconde lame (3) avec un trou (19) dans un moule,
couler une seconde incrustation (17) pour avoir une extrémité en saillie (18) faisant saillie dans le trou (19) dans la seconde lame (3) et une bride (20) en contact avec une surface externe (21) de la seconde lame (3),
assembler une première extrémité (14) d'un arbre (13) ayant un épaulement transversal (16) dans une seconde extrémité (15), à l'extrémité en saillie (9) de la première incrustation (8) par une vis (28) s'étendant à travers la première incrustation (8),
faire tourner l'arbre (13) et la seconde incrustation (17) dans une position de libération mutuelle prédéterminée et enfiler l'arbre (13) avec l'épaulement (16) dans un trou (22) dans la seconde incrustation (17), ledit trou (22) ayant une forme et une largeur permettant le passage de la seconde extrémité de l'arbre (13) avec l'épaulement (16), et
faire tourner l'arbre (13) et la seconde incrustation (17) à distance de la position de libération mutuelle prédéterminée afin de mettre en prise l'épaulement (16) avec une surface de mise en prise (23) de la seconde incrustation (17) et afin de fixer la première (2) et la seconde lame (3) de manière pivotante entre elles avec l'épaulement (16) et la surface de mise en prise (23).
